# EUROPÄISCHE PATENTSCHRIFT

(11) **EP 1 596 615 B1**
(45) Veröffentlichungstag und Bekanntmachung des Hinweises auf die Patenterteilung: **19.02.2020**
(21) Anmeldenummer: 04011055.3
(22) Anmeldetag: 10.05.2004
(51) Int. Cl.: H04W 88/02, H04W 8/20, H04W 92/08

(54) **SIM-KARTE MIT VERÄNDERBAREM SPEICHER UND METHODE DAFÜR**
SIM CARD WITH VARIABLE MEMORY AND METHOD THEREFORE
CARTE SIM AVEC UNE MEMOIRE VARIABLE ET PROCÉDÉ ASSOCIÉ

(43) Veröffentlichungstag der Anmeldung: 16.11.2005
(73) Patentinhaber: Vodafone Holding GmbH, 40213 Düsseldorf (DE)
(72) Erfinder: Jungblut, Stephan, 40213 Düsseldorf (DE); Bosch, Jos, 6221 CS, Maastricht (NL)
(74) Vertreter: Weisbrodt, Bernd

(56) Entgegenhaltungen:
- WO-A-00/48416
- WO-A-00/69183
- US-A1- 2001 056 523

## Beschreibung

### Technisches Gebiet

Die Erfindung betrifft eine SIM-Karte für ein Mobilfunkendgerät zur Identifikation eines Teilnehmers in einem Mobilfunknetz, wobei die SIM-Karte Informationen, insbesondere zur Berechtigung des Teilnehmers, enthält, welche durch einen SIM-Kartenleser/-schreiber des Mobilfunkendgeräts ausgelesen und über das Mobilfunknetz an den Betreiber übermittelt werden können, mit einem ersten Bereich in einem Speicher zur Speicherung von Daten zur Identifikation und/oder Authentifizierung in mobilfunkfremden Systemen, wobei der erste Bereich des Speichers zur Speicherung von Daten zur Identifikation und/oder Authentifizierung in mobilfunkfremden Systemen veränderbar ausgebildet ist, so dass alle Daten, die dort abgespeichert werden, verändert, neu hineingeschrieben, und/oder gelöscht werden können.

Ferner betrifft die Erfindung ein Verfahren für eine erfindungsgemäße SIM-Karte für Mobilfunkendgeräte zur Identifikation eines Teilnehmers in einem Mobilfunknetz, wobei Daten zur Identifikation und/oder Authentifizierung in mobilfunknetzfremden Systemen in dem ersten Bereich eines Speichers einer SIM-Karte gespeichert werden.

### Stand der Technik

Mobilfunkendgeräte werden in Mobilfunknetzen, welche beispielsweise nach dem GSM- (= Global System for Mobile Communication) oder auch UMTS-Standard (= Universal Mobile Telecommunication System) arbeiten, eingesetzt. Um sich in ein Mobilfunknetz als Teilnehmer einbuchen zu können, werden den Teilnehmern zum Betrieb ihres Mobilfunkendgeräts von den Betreibern individuelle SIM-Karten (Subscriber Identity Module = Teilnehmer-Identifikationsmodul) ausgegeben.

Eine SIM-Karte ist eine Chipkarte, die zum Identifizieren eines Mobilfunknetzteilnehmers in einem Mobilfunknetz benötigt wird. Sie wird dazu in Mobilfunkendgeräte eingesetzt. Mobilfunkendgeräte sind zum Beispiel Mobilfunktelefone und Telematikendgeräte.

Chipkarten werden derzeit vielfältig eingesetzt. Automobilclubs, Rabatsysteme, Krankenkassen, Fluggesellschaften, Versicherungen und Kreditinstitute sind nur einige Beispiele dafür, wer solche Chipkarten ausstellt. Praktisch jedes Kreditinstitut gibt mittlerweile Geld- und Kreditkarten aus, die einen Chip beinhalten. In dem Chip sind insbesondere persönliche Daten bzgl. der Identifikation und Authentifizierung enthalten.

Auch die Krankenkassen haben ihre Mitglieder mit Chipkarten ausgerüstet, mit denen sie sich beim Arzt oder im Krankenhaus identifizieren. Jedes Mal, wenn eine Änderung der persönlichen Daten erfolgt, z.B. durch einen Wohnortwechsel, Änderung des Familienstandes oder der Krankenkasse selbst, wird eine neue Chipkarte ausgestellt. Die alte Chipkarte wird dann nicht selten und nicht sonderlich umweltfreundlich entsorgt.

Chip- und Kreditkarten sind ferner für viele Anwender ein Ärgernis, weil für jede Karte oft eine eigene PIN (= Personal Identification Number) notwendig ist. Verfügt jemand über mehrere Karten, so kann er sich oft nicht alle PINs merken. Außerdem füllen die zahlreichen Chipkarten die Geldbörse in einem störenden Maße. Für die Chipkarten ist in den Geldbörsen oft nicht ausreichender Platz, um diese unterzubringen. Es sind dann zusätzliche Etuis für Kreditkarten und dergleichen erforderlich.

*Die* US 2001/0056523 *offenbart, wie Speicherbereiche einer SIM-Karte dynamisch in ihrer Größe verändert und verschiedenen Anwendungen zugeordnet werden können. Die Größenänderung oder Zuordnung von Speicherbereichen kann von einem Betriebssystem der SIM-Karte, einer auf der SIM-Karte gespeicherten Anwendung oder einem Benutzer vorgenommen werden. Weiterhin wird eine Größenänderung oder Zuordnung von Speicherbereichen einer SIM-Karte über ein Mobilfunknetz von einem externen Server beschrieben. Eine Änderung von Speicherinhalten zur Identifikation und*/*oder Authentifizierung in mobilfunkfremden Systemen wird nicht beschrieben.*

*Die WO 00*/*69183 offenbart eine als SIM-Karte verwendbare Smartcard mit verschiedenen, im Speicher der Smartcard gespeicherten Anwendungsprogrammen. Je nach einem, ebenfalls im Speicher der Smartcard gespeicherten, Anwenderprofil darf ein Benutzer bestimmte Anwendungsprogramme nutzen. Ein bestimmtes, für Dienstanbieter oder Eigentümer der Smartcard vorgesehenes Profil erlaubt eine Änderung anderer, gespeicherter Anwenderprofile. Eine Änderung von Anwenderprofilen oder anderen in der Smartcard gespeicherten Daten, insbesondere zur Identifikation und*/*oder Authentifizierung in mobilfunkfremden Systemen, über ein Mobilfunknetz ist nicht vorgesehen.*

*Die WO 00*/*48416 beschreibt eine SIM-Karte für ein Mobilfunkendgerät, bei der verschiedene Anwendungsprogramme mit entsprechenden Zugangs- oder Verschlüsselungscodes in einem Speicher der SIM-Karte gespeichert sind. Neue oder veränderte Anwendungsprogramme können über ein Mobilfunknetz, beispielsweise von einem Server eines Dienstanbieters übertragen und in einem Speicher der SIM-Karte gespeichert werden. Eine Verwaltung, beispielsweise für eine Aktualisierung der Anwendungsprogramme wird nicht aufgezeigt.*

*Ein Nachteil bei der Nutzung einer solchen SIM-Karte ergibt sich daraus, dass ein Benutzer die Verwaltung, Änderung oder Löschung einzelner Identifikations- und*/*oder Authentifizierungsdaten zeitaufwendig selber vornehmen oder jeweils den entsprechenden Dienstanbieter beauftragen muss. Weiterhin muss ein Benutzer beispielsweise bei einem Verlust oder einer Entwendung der SIM-Karte oder eines die SIM-Karte enthaltenen Mobilfunkendgeräts alle Dienstanbieter einzeln informieren und die Sperrung der Anwendung veranlassen.*

### Offenbarung der Erfindung

Aufgabe der Erfindung ist es daher, eine SIM-Karte zu schaffen, die die Nachteile des Standes der Technik beseitigt und eine SIM-Karte bzw. ein Verfahren zu schaffen, das SIM-Karten sicher und vielfältig einsetzbar macht.

Erfindungsgemäß wird die Aufgabe durch eine SIM-Karte der eingangs genannten Art, wie in dem unabhängigen Anspruch 1 definiert, gelöst.

Ferner wird die Aufgabe durch ein Verfahren der eingangs genannten Art gelöst, wie in dem unabhängigen Anspruch 8 definiert.

Die Erfindung beruht auf dem Prinzip, einen zusätzlichen Speicherbereich zu schaffen, in dem alle nur erdenklichen Daten bzgl. der Identifikation und Authentifizierung gespeichert werden können. Diese dort gespeicherten Daten beziehen sich nicht unmittelbar auf den Betrieb mit dem Mobilfunknetz. So lässt sich die SIM-Karte nicht nur zur Identifikation bzw. Authentifizierung im Mobilfunknetz verwenden, sondern auch für andere Anwendungen.

Beispielsweise können die persönlichen Krankenkassendaten zur Identifizierung des Patienten, die bisher auf einer separaten Chipkarte gespeichert wurden, nun auf der erfindungsgemäßen SIM-Karte gespeichert werden. Eine eigene Chipkarte für die Krankenkasse, wie sie derzeit üblich ist, wird damit entbehrlich. Die Verwendung von nur einer einzigen Chipkarte zur Identifizierung, die vielfältig einsetzbar ist, hilft, unnötige Chipkarten mitzuführen. Sie dient somit als Ersatz für zahlreiche herkömmliche Chipkarten, weil sie deren Funktionen übernehmen kann. Ferner schont eine solch vielfältig einsetzbare Chipkarte die Umwelt, da für viele Anwendungen nur noch eine einzige Chipkarte erforderlich ist. Ein weiterer Vorteil, der sich durch die Erfindung ergibt, ist, dass man sich nun im Prinzip nur noch einmal für alle Karten identifizieren muss. Damit werden die zahlreichen PINs, die sich ein Kartenbesitzer derzeit merken muss, überflüssig.

*Dabei ist* der erste Bereich des Speichers zur Speicherung von Daten zur Identifikation und/oder Authentifizierung in mobilfunkfremden Systemen veränderbar ausgebildet. Durch diese Maßnahme lassen sich beliebige Daten zur Identifikation und/oder Authentifizierung, die nicht unmittelbar für die Teilnahme am Mobilfunknetzbetrieb erforderlich sind, in den Speicherbereich schreiben, verändern und ggf. wieder löschen. So können beispielsweise Daten zur Identifikation und/oder Authentifizierung, die bisher auf einer Krankenkassenkarte abgespeichert sind, nun auf der SIM-Karte gespeichert und bei Bedarf verändert werden.

*Durch das erfindungsgemäßen Verfahren können die Speicherbereiche der SIM-Karte von einer zentralen Rechnereinheit des Mobilfunknetzes verwaltet und*/*oder verändert werden. Durch diese Maßnahme ist es nunmehr möglich, zentral über das Mobilfunknetz auf die Daten Einfluss zu nehmen. So können leicht der SIM-Karte zusätzliche neue Eigenschaften zugeordnet oder ggf. bestehende Eigenschaften entzogen werden.*

In einer vorteilhaften Ausgestaltung der Erfindung ist ein zweiter Bereich in einem Speicher zur Speicherung von Daten, zur Identifikation und/oder Authentifizierung in Mobilfunknetzen vorgesehen. Dieser Bereich dient insbesondere dazu, noch Daten zur Identifikation und/oder Authentifizierung in zusätzliche Mobilfunknetze zu speichern. Dadurch besteht die Möglichkeit, dass sich ein Teilnehmer in Mobilfunknetze verschiedener Anbieter einbuchen kann. Vorteilhafterweise ist der zweite Speicherbereich veränderbar ausgebildet, so dass die Daten zur Identifikation und/oder Authentifizierung verändert werden können.

In einer weiteren bevorzugten Ausbildung der Erfindung ist der Speicher verschlüsselt ausgebildet. Dadurch ist der Bereich des Speichers nur Berechtigten zugänglich, die über einen entsprechenden Zugangsschlüssel verfügen.

Ein vorteilhafter Aspekt der Erfindung ergibt sich, wenn die SIM-Karte Mittel enthält, die zum Bezahlen als Geldersatz dienen. Durch diese Mittel lässt sich die SIM-Karte als Zahlungsmittel einsetzen. Beispielsweise kann ein Teilnehmer, der sich identifiziert und authentifiziert hat, Geldüberweisungen über das Mobilfunknetz tätigen. Der Teilnehmer kann auf diese Weise bargeldlos zahlen.

Ein vorteilhafter Aspekt der erfindungsgemäßen SIM-Karte ergibt sich ferner durch einen dritten Bereich des Speichers, in dem beliebige Daten gespeichert werden können. In einem solchen Speicherbereich lassen sich beispielsweise Patientendaten, Rabattpunkte für ein Rabattsystem und dergleichen speichern. Die Daten des ersten, zweiten und dritten Speicherbereichs sind prinzipiell miteinander verknüpfbar. Vorteilhafterweise ist auch der dritte Speicherbereich veränderbar ausgebildet, wodurch die Daten verändert und ggf. auch gelöscht werden können. Durch die Verschlüsselung auch dieses Speicherbereiches wird der Zugriff durch Unbefugte auf die Daten verhindert

Eine vorteilhafte Ausgestaltung des erfindungsgemäßen Verfahrens ergibt sich dadurch, dass Daten zur Identifikation und/oder Authentifizierung in Mobilfunknetzen in dem zweiten Bereich des Speichers gespeichert werden.

Vorteilhafterweise können Daten von verschiedenen Identitäten in dem Speicher gespeichert werden. Dadurch lässt sich die SIM-Karte von mehreren Personen nutzen. In einer geeigneten Ausbildung der Erfindung ist jede Identität separat abrufbar. Beispielsweise kann ein firmeneigenes Mobilfunkendgerät, welches über eine erfindungsgemäße SIM-Karte verfügt, zwischen mehreren Mitarbeitern ausgetauscht werden, ohne die SIM-Karte im Gerät zu wechseln. Die Mitarbeiter müssen sich nur jeweils identifizieren und authentifizieren. Wenn die erforderlichen Daten der Mitarbeiter in dem Speicher der SIM-Karte vorhanden sind, können sie jeweils das Mobilfunkendgerät austauschen und nutzen. Ein Austausch der SIM-Karte ist nicht erforderlich. Jeder verwendet die SIM-Karte individuell.

In einer bevorzugten Ausbildung des erfindungsgemäßen Verfahrens werden die Daten, insbesondere zur Identifikation und/oder Authentifizierung, sowie bezüglich des bargeldlosen Zahlungsverkehrs verschlüsselt abgespeichert. Der Sicherheitsaspekt ist bei SIM-Karten wegen eines möglichen Missbrauchs besonders wichtig. Es ist daher auch Anliegen des erfindungsgemäßen Verfahrens, diesen Missbrauch vorzubeugen.

Erfindungsgemäß werden die Speicherbereiche der SIM-Karte von einer zentralen Rechnereinheit des Mobilfunknetzes verwaltet und/oder verändert. Durch diese Maßnahme ist es nunmehr möglich, zentral über das Mobilfunknetz auf die Daten Einfluss zu nehmen. So können leicht der SIM-Karte zusätzliche neue Eigenschaften zugeordnet oder ggf. bestehende Eigenschaften entzogen werden.

In einer vorteilhaften Ausgestaltung des erfindungsgemäßen Verfahrens sind die Daten aus dem ersten und/oder zweiten und/oder dritten Bereich des Speichers über das Mobilfunknetz abrufbar. Damit soll erreicht werden, dass, beispielsweise im Falle einer Krankenkassenkarte, die Identifikation und Authentifizierung vom Arzt über das Mobilfunknetz abrufbar sind.

Eine geeignete Ausbildung des erfindungsgemäßen Verfahrens ergibt sich dadurch, dass beliebige Daten in dem dritten Bereich des Speichers gespeichert werden. So können beispielsweise Patientendaten bzgl. der Krankheitsverläufe und deren Behandlungstherapie auch abgespeichert werden.

Sollte der Speicherplatz begrenzt sein und für die anfallenden Daten nicht ausreichen, werden die Daten, welche in den Speicherbereichen gespeichert sind, In einer vorteilhaften Ausgestaltung des erfindungsgemäßen Verfahrens ganz oder teilweise komprimiert.

Eine weitere vorteilhafte Ausgestaltung des erfindungsgemäßen Verfahrens ergibt sich dadurch, dass eine initiale Identität in dem Speicher gespeichert wird. Auf diese Weise ist die SIM-Karte immer einer Identität zugeordnet.

Zur Sicherung der gespeicherten Daten sind in einer bevorzugten Ausbildung des erfindungsgemäßen Verfahrens die gespeicherten Daten, welche in den Speicherbereichen gespeichert sind, ganz oder teilweise kodiert. Vorzugsweise wird dazu ein digitaler Schlüssel für die Kodierung verwendet. Dieser besteht üblicherweise aus einem geeigneten kryptografischen Algorithmus.

Um unbefugten den Zugriff auf die gespeicherten Daten zu erschweren ist dieser digitale Schlüssel für die Kodierung veränderbar ausgebildet. Bei Angriffen durch so genannte "Hacker" wird der digitale Schlüssel ganz ausgetauscht oder Teile davon verändert.

Weitere Vorteile ergeben sich aus dem Gegenstand der Unteransprüche sowie den Zeichnungen mit den dazugehörigen Beschreibungen.

### Kurze Beschreibung der Zeichnung

- Fig. 1: zeigt eine erfindungsgemäße SIM-Karte.
- Fig. 2: zeigt in einer Prinzipskizze das erfindungsgemäße Verfahren mit der erfindungsgemäßen SIM-Karte.

### Bevorzugtes Ausführungsbeispiel

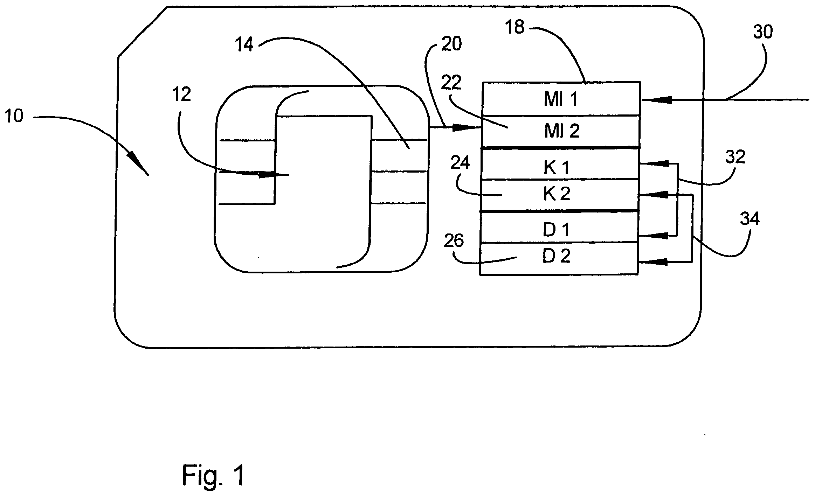

In Fig. 1 wird in einer Prinzipskizze eine erfindungsgemäße SIM-Karte 10 dargestellt. In die SIM-Karte 10 ist ein Chip 12 integriert. Bei dem Chip 12 handelt es sich üblicherweise um einen Halbleiterchip, an dessen äußeren und sichtbaren Seite Kontaktflächen 14 vorgesehen sind. Ein nicht dargestellter SIM-Kartenleser kann über die Kontaktflächen 14 Daten aus dem Chip 12 auslesen und ggf Daten hineinschreiben.

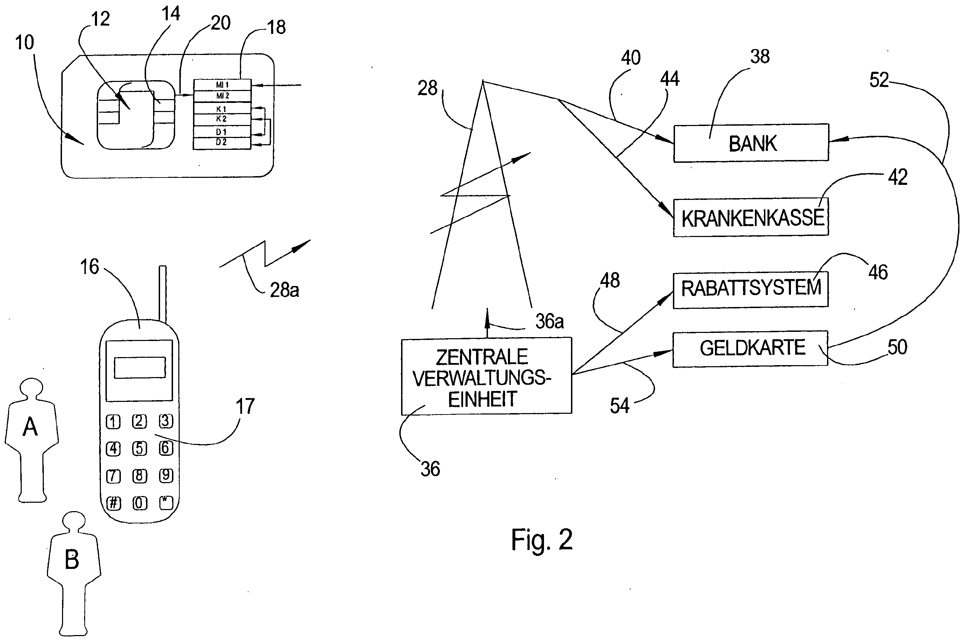

Der SIM-Kartenleser ist vorzugsweise in einem Mobilfunkendgerät 16 (Fig. 2) vorgesehen.

Der Chip 12 der SIM-Karte 10 verfügt über einen Speicher 18, der symbolisch neben dem Chip 12 abgebildet ist. Pfeil 20 weist auf den Speicher 18. Der Speicher 18 ist veränderbar ausgebildet, d.h. alle Daten, die dort abgespeichert werden, können verändert, neu hineingeschrieben, aber auch gelöscht werden. Damit Unbefugten der Zugriff verwehrt wird, sind die Daten des Speichers 18 verschlüsselt gespeichert. Nur mit jeweils einem geeigneten Decodierschlüssel können die dort gespeicherten Daten abgefragt bzw. verändert werden. Der Speicher 18 weist im vorliegenden Ausführungsbeispiel drei Speicherbereiche 22, 24 und 26 auf. Die Speicherbereiche 22, 24, 26 sind durch dickere Linien voneinander getrennt. Grundsätzlich sind bei Bedarf noch weitere Speicherbereiche möglich. Sollte der Datenbestand, der in dem Speicher 18 abgelegt werden soll, für den Speicher 18 mengenmäßig zu groß sein, besteht noch die Möglichkeit, die Daten in dem Speicher mit üblichen Kompressionsmethoden zu komprimieren.

Im Bereich 22 des Speichers 18 werden die erforderlichen Daten zur Identifikation und Authentifizierung in einem Mobilfunknetz 28 (vgl. Fig. 2) abgelegt. Diese Daten werden mit MI 1, MI 2, ... bezeichnet. In diesem Speicher 22 stehen insbesondere Daten MI 1, MI 2, ... bzgl. des Heimatnetzes sowie individuelle Daten, die üblicherweise zum Einbuchen in das Mobilfunknetz als Teilnehmer erforderlich sind. Diese Daten sind veränderbar, so dass beispielsweise die Heimatkennung geändert werden kann, ohne die SIM-Karte 10 auszutauschen. Bei bereits vorhandenen Datensätzen müssen die gewünschten lediglich aktiviert werden. Ein aktiver Datensatz für die Heimatkennung wird durch Pfeil 30 angezeigt. Falls ein gewünschter Datensatz noch nicht vorhanden ist, muss er in dem Speicherbereich 22 neu gespeichert werden. Grundsätzlich sind auch mehr als zwei Datensätze für die Identifikation in einem Mobilfunknetz 28 möglich.

Im Speicherbereich 24 werden Daten K1, K2, ... zur Identifikation und Authentifizierung in mobilfunkfremden Systemen abgelegt. So können dort beispielsweise individuelle Daten für eine Kredit-, Check oder Geldkarte gespeichert werden. Auch andere Daten, z.B. von Rabattsystemen, Daten für die Zugangsberechtigung eines Firmengeländes, Daten zur Arbeitszeiterfassung, Führerscheindaten, Krankenkassendaten und so weiter, können dort abgelegt werden. Grundsätzlich lassen sich dort alle Daten ablegen, für die es bisher jeweils einzelne Chip- oder Magnetstreifenkarten gibt. Die Daten K1, K2, ... sind im Speicherbereich 24 verschlüsselt, so dass nur Befugten der Zugriff auf diese Daten K1, K2, ... möglich ist. Die in diesem Speicherbereich 24 gespeicherten Daten K1, K2, ... dienen dazu, sich in einem mobilfunkfremden System zu identifizieren und/oder zu authentifizieren. Grundsätzlich ist der Speicherbereich 24 so ausgelegt, dass Daten zur Identifikation von mehreren Personen dort gespeichert sind. Auf diese Weise können mehrere Teilnehmer A, B (vgl. Fig. 2) das Mobilfunkendgerät 16 nutzen, ohne die SIM-Karte 10 aufwendig wechseln zu müssen. Dies ist besonders bei Firmentelefonen interessant, welche durch mehrere Mitarbeiter genutzt werden.

In dem dritten Bereich 26 des Speichers 18 werden Daten D1, D2, ... abgelegt, die verändert werden können. Hierbei handelt es sich beispielsweise um Adressdaten eines Mobilfunkteilnehmers. Unter Umständen lassen sich hier auch in verschlüsselter Form Geldbeträge abspeichern, so dass die SIM-Karte 10 in Verbindung mit dem Mobilfunkendgerät 16 als Zahlungsmittel verwendet werden kann. Bestimmte Datensätze können speicherbereichübergreifend miteinander verknüpft sein, wie Pfeile 32, 34 andeuten. So reicht es z.B. aus, dass die Identifikation für die Kredit- Geldkarten nur auf einen und denselben Datensatz zugreift. Insbesondere im Falle des Abhandenkommens der SIM-Karte 10, können die vielfältigen Funktionen mit einem Mal gesperrt werden. Es ist nun nicht mehr notwendig, jede Kredit-, Check- oder Geldkarte einzeln sperren zu lassen. Dies macht eine solche SIM-Karte 10 vor Missbrauch besonders sicher.

Anhand von Fig. 2 soll das erfindungsgemäß Verfahren mit der SIM-Karte 10 erläutert werden. In Fig. 2 ist die SIM-Karte 10 gemäß Fig. 1 abgebildet. Die SIM-Karte 10 wird in ein Chip-Kartenlesegerät, welches Bestandteil des Mobilfunkendgerät 16 ist, eingelegt. Mit dieser SIM-Karte 10 ist ein Teilnehmer A bzw. B berechtigt, über das Mobilfunknetz 28 zu kommunizieren, Pfeil 28a. Das Mobilfunknetz 28 wird durch den Mast symbolisch dargestellt und arbeitet beispielsweise nach dem GSM- oder UMTS-Standard.

Die Identifikation und Authentifizierung erfolgt über geeignete individuelle Codes (PIN), welche über das Bedienerfeld 17 des Mobilfunkendgeräts 16 durch einen Teilnehmer A, B eingegeben werden. Die Überprüfung der Identifikation sowie die Authentifizierung werden in einer zentralen Verwaltungseinheit 36 vorgenommen. Einmal identifiziert und authentifiziert, kann ein Teilnehmer A bzw. B z.B. am bargeldlosen Zahlungsverkehr von Kreditinstituten 38 teilnehmen. Die Daten für den Zahlungsverkehr werden unmittelbar über das Mobilfunknetz 28 an die Kreditinstitute 38 übermittelt, Pfeil 40.

Analog kann sich ein Teilnehmer auf diese Weise bei einem Arzt bzw. im Krankenhaus identifizieren und seine Krankenkassendaten hinterlassen. Der Arzt kann die Identifikations- und Krankenkassendaten über das Mobilfunknetz 28 unmittelbar von der Krankenkasse 42 erhalten, Pfeil 44. Gegebenenfalls können darüber auch weitere Patientendaten, wie Krankheitsbild, Therapie etc., weitergegeben werden.

Ein weiteres Beispiel für mobilfunkfremde Systeme ist ein Rabattsystem 46. Ein Teilnehmer A bzw. B identifiziert sich über seine SIM-Karte 10 in dem Rabattsystem 46 und kann Rabattpunkte oder dergleichen gutgeschrieben bekommen. Die Übermittlung der Daten von der zentralen Verwaltungseinheit zum Rabattsystem 46 hin, erfolgt hier beispielsweise über das Festnetz, symbolisiert durch Pfeil 48.

Die SIM-Karte 10 lässt sich auf diese Weise auch als Geldkarte 50 verwenden, mit der bargeldlos gezahlt werden kann. Geldbeträge werden als Guthaben in dem Speicher 26 der SIM-Karte 10 gespeichert. Durch die Vermittlung der zentralen Verwaltungseinheit 36 werden bestimmte Geldbeträge abgebucht und einem anderen gutgeschrieben, was durch Pfeil 52 symbolisiert wird. Pfeil 54 stellt den Vorgang der Vermittlung durch die zentrale Verwaltungseinheit 36 dar.

Die zentrale Verwaltungseinheit 36 enthält ein nicht dargestelltes Rechenzentrum, welches die Verwaltungsaufgaben übernimmt. Die Verwaltungseinheit 36 ist im vorliegenden Ausführungsbeispiel autorisiert, auf die SIM-Karte 10 über das Mobilfunknetz 28 Zugriff zu nehmen, Pfeil 36a. Sie kann über das Mobilfunknetz 28 die Daten in dem Speicher 18 verändern, löschen oder neu hineinschreiben. So können auch neue Dienste leicht einem Teilnehmer A bzw. B zugänglich gemacht werden. Anstatt, dass er jedes Mal eine neue Chipkarte erhält, werden die Funktionen nun von der SIM-Karte 10 übernommen.

## Patentansprüche

1. SIM-Karte (10) für ein Mobilfunkendgerät (16) zur Identifikation eines Teilnehmers (A, B) in einem Mobilfunknetz (28), wobei die SIM-Karte (10) Informationen, insbesondere zur Berechtigung des Teilnehmers (A, B), enthält, welche durch einen SIM-Kartenleser/-schreiber des Mobilfunkendgerätes ausgelesen und über das Mobilfunknetz an den Betreiber übermittelt werden können,
- mit einem ersten Bereich (24) in einem Speicher (18) zur Speicherung von Daten (K1, K2) zur Identifikation und/oder Authentifizierung in mobilfunkfremden Systemen (38, 42, 46, 50),
- wobei der erste Bereich (24) des Speichers (18) zur Speicherung von Daten (K1, K2) zur Identifikation und/oder Authentifizierung in mobilfunkfremden Systemen (38, 42, 46, 50) veränderbar ausgebildet ist, so dass alle Daten, die dort abgespeichert werden, verändert, neu hineingeschrieben, und/oder gelöscht werden können,
**dadurch gekennzeichnet, dass**
- der erste Speicherbereich (24) der SIM-Karte (10) von einer zentralen Verwaltungseinheit (36) des Mobilfunknetzes (28) verwaltbar und/oder veränderbar ist, wobei die zentrale Verwaltungseinheit (36) über das Mobilfunknetz (28) die Daten in dem Speicher (18) verändern, löschen oder neu hineinschreiben kann, und
- ein weiterer veränderbarer Speicherbereich (26) vorgesehen ist, in welchem die Speicherung beliebiger von den Daten (K1, K2) zur Identifikation und/oder Authentifizierung abweichender Daten (D1, D2) als Ersatz für herkömmliche Chipkarten vorgesehen ist, umfassend Adressdaten, Krankenkassendaten, Daten zu Rabattpunkten für ein Rabattsystem, Daten zur Identifikation für Kredit- oder Geldkarten sowie Patientendaten bezüglich Krankheitsverläufen und deren Behandlungstherapie, zur Erzielung einer einmaligen Identifizierung für alle bisherigen Karten.

2. SIM-Karte (10) für Mobilfunkendgeräte (16) zur Identifikation eines Teilnehmers (A, B) in einem Mobilfunknetz (28) nach einem der Ansprüche 1 oder 2, **dadurch gekennzeichnet, dass** ein zweiter Bereich (22) in dem Speicher (18) zur Speicherung von Daten (MI1, MI2) zur Identifikation und/oder Authentifizierung in Mobilfunknetzen (28) vorgesehen ist.

3. SIM-Karte (10) für Mobilfunkendgeräte (16) zur Identifikation eines Teilnehmers (A, B) in einem Mobilfunknetz (28) nach einem der Ansprüche 1 bis 3, **dadurch gekennzeichnet, dass** der zweite Bereich (22) des Speichers (18) zur Speicherung von Daten (MI1, MI2) zur Identifikation und/oder Authentifizierung in Mobilfunknetzen (28) veränderbar ausgebildet ist.

4. SIM-Karte (10) für Mobilfunkendgeräte (16) zur Identifikation eines Teilnehmers (A, B) in einem Mobilfunknetz (28) nach einem der Ansprüche 1 bis 4, **dadurch gekennzeichnet, dass** der Speicher (18) verschlüsselt ausgebildet ist.

5. SIM-Karte (10) für Mobilfunkendgeräte (16) zur Identifikation eines Teilnehmers (A, B) in einem Mobilfunknetz (28) nach einem der Ansprüche 1 bis 5, **dadurch gekennzeichnet, dass** Mittel zum bargeldlosen Bezahlen vorgesehen sind.

6. SIM-Karte (10) für Mobilfunkendgeräte (16) zur Identifikation eines Teilnehmers (A, B) in einem Mobilfunknetz (28) nach einem der Ansprüche 1 bis 5, **dadurch gekennzeichnet, dass** der weitere Bereich (26) des Speichers (18) veränderbar ausgebildet ist.

7. SIM-Karte (10) für Mobilfunkendgeräte (16) zur Identifikation eines Teilnehmers (A, B) in einem Mobilfunknetz (28) nach einem der Ansprüche 1 bis 6, **dadurch gekennzeichnet, dass** der weitere Bereich (26) des Speichers (18) verschlüsselt ausgebildet ist.

8. Verfahren für eine SIM-Karte (10) für Mobilfunkendgeräte (16) zur Identifikation eines Teilnehmers (A, B) in einem Mobilfunknetz nach einem der Ansprüche 1 bis 7, wobei Daten zur Identifikation und/oder Authentifizierung in mobilfunknetzfremden Systemen (38, 42, 46, 50) in einem ersten Bereich (24) eines Speichers (18) einer SIM-Karte (10) gespeichert werden,
**dadurch gekennzeichnet, dass**
der erste Speicherbereich (24) der SIM-Karte (10) von einer zentralen Verwaltungseinheit (36) des Mobilfunknetzes (28) verwaltet und/oder verändert werden kann, wobei die zentrale Verwaltungseinheit (36) über das Mobilfunknetz (28) die Daten in dem Speicher (18) verändern, löschen oder neu hineinschreiben kann, und
beliebige von den Daten (K1, K2) zur Identifikation und/oder Authentifizierung abweichende Daten (D1, D2) als Ersatz für herkömmliche Chipkarten in einem weiteren veränderbaren Speicherbereich (26) gespeichert werden, wobei diese Daten (D1, D2) Adressdaten, Krankenkassendaten, Daten zu Rabattpunkten für ein Rabattsystem, Daten zur Identifikation für Kredit- oder Geldkarten sowie Patientendaten bezüglich Krankheitsverläufen und deren Behandlungstherapie umfassen, wodurch eine einmalige Identifizierung für alle bisherigen Karten erzielt wird.

9. Verfahren für eine SIM-Karte (10) für Mobilfunkendgeräte (16) zur Identifikation eines Teilnehmers (A, B) in einem Mobilfunknetz nach Anspruch 8, **dadurch gekennzeichnet, dass** Daten zur Identifikation und/oder Authentifizierung in Mobilfunknetzen (28) in dem zweiten Bereich (22) des Speichers (18) gespeichert werden.

10. Verfahren für eine SIM-Karten (10) für Mobilfunkendgeräte (16) zur Identifikation eines Teilnehmers (A, B) in einem Mobilfunknetz (28) nach einem der Ansprüche 8 oder 9, **dadurch gekennzeichnet, dass** Daten von verschiedenen Identitäten (A, B) in dem Speicher (18) gespeichert werden.

11. Verfahren für eine SIM-Karte (10) für Mobilfunkendgeräte (16) zur Identifikation eines Teilnehmers (A, B) in einem Mobilfunknetz (28) nach einem der Ansprüche 8 bis 10, **dadurch gekennzeichnet, dass** jede Identität (A, B) separat abrufbar ist.

12. Verfahren für eine SIM-Karte (10) für Mobilfunkendgeräte (16) zur Identifikation eines Teilnehmers (A, B) in einem Mobilfunknetz (28) nach einem der Ansprüche 8 bis 11, **dadurch gekennzeichnet, dass** die Daten, insbesondere zur Identifikation und/oder Authentifizierung sowie bezüglich des bargeldlosen Zahlungsverkehrs, verschlüsselt abgespeichert werden.

13. Verfahren für eine SIM-Karte (10) für Mobilfunkendgeräte (16) zur Identifikation eines Teilnehmers (A, B) in einem Mobilfunknetz (28) nach einem der Ansprüche 8 bis 12, **dadurch gekennzeichnet, dass** die Daten aus dem ersten (24) und/oder zweiten (22) und/oder weiteren Bereich (26) des Speichers (18) über das Mobilfunknetz (28) abrufbar sind.

14. Verfahren für eine SIM-Karte (10) für Mobilfunkendgeräte (16) zur Identifikation eines Teilnehmers (A, B) in einem Mobilfunknetz (28) nach einem der Ansprüche 8 bis 13, **dadurch gekennzeichnet, dass** die Daten, welche in den Speicherbereichen (22, 24, 26) gespeichert sind, ganz oder teilweise komprimiert werden.

15. Verfahren für eine SIM-Karte (10) für Mobilfunkendgeräte (16) zu Identifikation eines Teilnehmers (A, B) in einem Mobilfunknetz (28) nach einem der vorherigen Ansprüche 10 bis 14, **dadurch gekennzeichnet, dass** zwischen jeder gespeicherten Identität (A, B) gesichert umgeschaltet werden kann.

16. Verfahren für eine SIM-Karte (10) für Mobilfunkendgeräte (16) zur Identifikation eines Teilnehmers (A, B) in einem Mobilfunknetz (28) nach einem der vorherigen Ansprüche 10 bis 15, **dadurch gekennzeichnet, dass** eine initiale Identität (A) in dem Speicher (18) gespeichert wird.

17. Verfahren für eine SIM-Karte (10) für Mobilfunkendgeräte (16) zur Identifikation eines Teilnehmers (A, B) in einem Mobilfunknetz (28) nach einem der vorherigen Ansprüche 8 bis 16, **dadurch gekennzeichnet, dass** die gespeicherten Daten, welche in den Speicherbereichen (22, 24, 26) gespeichert sind, ganz oder teilweise kodiert werden.

18. Verfahren für eine SIM-Karte (10) für Mobilfunkendgeräte (16) zur Identifikation eines Teilnehmers (A, B) in einem Mobilfunknetz (28) nach Anspruch 17, **dadurch gekennzeichnet, dass** ein digitaler Schlüssel für die Kodierung der gespeicherten Daten verwendet wird.

19. Verfahren für eine SIM-Karte (10) für Mobilfunkendgeräte (16) zur Identifikation eines Teilnehmers (A, B) in einem Mobilfunknetz (28) nach Anspruch 18, **dadurch gekennzeichnet, dass** der digitale Schlüssel für die Kodierung veränderbar ausgebildet ist.

## Claims

1. A SIM card (10) for a mobile terminal (16) for identifying a subscriber (A, B) in a mobile radio network (28), wherein the SIM card (10) contains information, in particular about the authorization of the subscriber (A, B), which can be read by a SIM card reader/writer of the mobile terminal and be transmitted to the provider via the mobile radio network,
- comprising a first area (24) in a storage (18) for storing data (K1, K2) for the identification and/or authentication in mobile radio extrinsic systems (38, 42, 46, 50),
- wherein the first area (24) of the storage (18) for storing data (K1, K2) for the identification and/or authentication in mobile radio extrinsic systems (38, 42, 46, 50) is configured to be modifiable, such that all data which are stored there can be modified, newly introduced and/or removed,
**characterized in that**
- the first storage area (24) of the SIM card (10) can be administrated and/or modified by a central administration unit (36) of the mobile radio network (28), wherein the central administration unit (36) can modify, remove or newly introduce the data in the storage (18), and
- another modifiable storage area (26) is provided, in which the storage of any data (D1, D2) differing from the data (K1, K2) for the identification and/or authentication is provided as replacement for conventional chip cards, comprising address data, health insurance company data, data concerning discount points of a discount system, data for the identification for credit and cash cards as well as patient data with respect to courses of diseases and the treatment therapies thereof, for obtaining a one-time identification for all cards up to now.

2. A SIM card (10) for mobile terminals (16) for identifying a subscriber (A, B) in a mobile radio network (28) according to one of the claims 1 or 2, **characterized in that** a second area (22) is provided in the storage (18) for storing data (MI1, MI2) for the identification and/or authentication in mobile radio networks (28).

3. A SIM card (10) for mobile terminals (16) for identifying a subscriber (A, B) in a mobile radio network (28) according to one of the claims 1 to 3, **characterized in that** the second area (22) of the storage (18) for storing data (MI1, MI2) for the identification and/or authentication in mobile radio networks (28) is modifiable.

4. A SIM card (10) for mobile terminals (16) for identifying a subscriber (A, B) in a mobile radio network (28) according to one of the claims 1 to 4, **characterized in that** the storage (18) is encoded.

5. A SIM card (10) for mobile terminals (16) for identifying a subscriber (A, B) in a mobile radio network (28) according to one of the claims 1 to 5, **characterized in that** means of cashless payment are provided.

6. A SIM card (10) for mobile terminals (16) for identifying a subscriber (A, B) in a mobile radio network (28) according to one of the claims 1 to 5, **characterized in that** the other area (26) of the storage (18) is modifiable.

7. A SIM card (10) for mobile terminals (16) for identifying a subscriber (A, B) in a mobile radio network (28) according to one of the claims 1 to 6, **characterized in that** the other area (26) of the storage (18) is encoded.

8. A method for a SIM card (10) for mobile terminals (16) for identifying a subscriber (A, B) in a mobile radio network according to one of the claims 1 to 7, wherein data for the identification and/or the authentication in mobile radio network extrinsic systems (38, 42, 46, 50) are stored in a first area (24) of a storage (18) of a SIM card (10),
**characterized in that**
the first storage area (24) of the SIM card (10) can be administrated and/or modified by a central administration unit (36) of the mobile radio network (28), wherein the central administration unit (36) can modify, remove or newly introduce the data in the storage (18) via the mobile radio network (28), and
any data (D1, D2) differing from the data (K1, K2) for the identification and/or authentication will be stored as replacement for conventional chip cards in another modifiable storage area (26), wherein these data comprise address data, health insurance company data, data concerning discount points of a discount system, data for the identification for credit or cash cards as well as patient data with respect to courses of diseases and the treatment therapies thereof, whereby a one-time identification for all cards up to now is achieved.

9. A method for a SIM card (10) for mobile terminals (16) for identifying a subscriber (A, B) in a mobile radio network according to claim 8, **characterized in that** data for the identification and/or authentication in mobile radio networks (28) will be stored in the second area (22) of the storage (18).

10. A method for a SIM card (10) for mobile terminals (16) for identifying a subscriber (A, B) in a mobile radio network (28) according to one of the claims 8 or 9, **characterized in that** data of different identities (A, B) will be stored in the storage (18).

11. A method for a SIM card (10) for mobile terminals (16) for identifying a subscriber (A, B) in a mobile radio network (28) according to one of the claims 8 to 10, **characterized in that** each identity (A, B) can be separately retrieved.

12. A method for a SIM card (10) for mobile terminals (16) for identifying a subscriber (A, B) in a mobile radio network (28) according to one of the claims 8 to 11, **characterized in that** the data, in particular for the identification and/or the authentication with respect to cashless payment transactions, will be stored in an encoded manner.

13. A method for a SIM card (10) for mobile terminals (16) for identifying a subscriber (A, B) in a mobile radio network (28) according to one of the claims 8 to 12, **characterized in that** the data of the first area (24) and/or second area (22) and/or other area (26) of the storage (18) can be retrieved via the mobile radio network (28).

14. A method for a SIM card (10) for mobile terminals (16) for identifying a subscriber (A, B) in a mobile radio network (28) according to one of the claims 8 to 13, **characterized in that** the data which are stored in the storage areas (22, 24, 26) will be completely or partly compressed.

15. A method for a SIM card (10) for mobile terminals (16) for identifying a subscriber (A, B) in a mobile radio network (28) according to one of the preceding claims 10 to 14, **characterized in that** it is possible to switch in a secure manner between each stored identity (A, B).

16. A method for a SIM card (10) for mobile terminals (16) for identifying a subscriber (A, B) in a mobile radio network (28) according to one of the preceding claims 10 to 15, **characterized in that** an initial identity (A) will be stored in the storage (18).

17. A method for a SIM card (10) for mobile terminals (16) for identifying a subscriber (A, B) in a mobile radio network (28) according to one of the preceding claims 8 to 16, **characterized in that** the stored data which are stored in the storage areas (22, 24, 26) can be completely or partly encoded.

18. A method for a SIM card (10) for mobile terminals (16) for identifying a subscriber (A, B) in a mobile radio network (28) according to claim 17, **characterized in that** a digital key will be used for encoding the stored data.

19. A method for a SIM card (10) for mobile terminals (16) for identifying a subscriber (A, B) in a mobile radio network (28) according to claim 18, **characterized in that** the digital key for the encoding is modifiable.

## Revendications

1. Carte SIM (10) pour un terminal mobile (16) destinée à l'identification d'un abonné (A, B) dans un réseau radio mobile (28), la carte SIM (10) contenant des informations, notamment pour l'autorisation de l'abonné (A, B), qui peuvent être lues par un lecteur/écriteur de cartes SIM du terminal mobile et qui peuvent être transmises à l'opérateur via le réseau radio mobile,
- comprenant une première zone (24) dans une mémoire (18) pour stocker des données (K1, K2) pour l'identification et/ou l'authentification dans des systèmes extrinsèques à la radio mobile (38, 42, 46, 50),
- la première zone (24) de la mémoire (18) pour stocker des données (K1, K2) pour l'identification et/ou l'authentification dans des systèmes extrinsèques à la radio mobile (38, 42, 46, 50) étant modifiable, de sorte que toutes les données, qui y sont stockées, peuvent être modifiées, être nouvellement introduites et/ou être supprimées,
**caractérisée en ce que**
- la première zone de stockage (24) de la carte SIM (10) peut être gérée et/ou modifiée par une unité de gestion centrale (36) du réseau radio mobile (28), dans lequel l'unité de gestion centrale (36) peut modifier, supprimer ou nouvellement introduire les données dans la mémoire (18) via le réseau radio mobile (28), et
- une autre zone de stockage (26) modifiable est prévue, dans laquelle est prévu le stockage de données quelconques (D1, D2), qui diffèrent des données (K1, K2) pour l'identification et/ou l'authentification, en tant que remplacement pour des cartes à puce traditionnelles, comprenant des données d'adresse, des données de caisse maladie, des données concernant des points de réduction d'un système de réduction, des données pour l'identification par rapport aux cartes de crédit ou aux cartes bancaires, ainsi que des données de patient par rapport à des progressions des maladies et leurs thérapies de traitement pour obtenir une identification unique pour toutes les cartes précédentes.

2. Carte SIM (10) pour des terminaux mobiles (16) destinée à l'identification d'un abonné (A, B) dans un réseau radio mobile (28) selon l'une des revendications 1 ou 2, **caractérisée en ce qu'**une deuxième zone (22) est prévue dans la mémoire (18) pour stocker des données (MI1, MI2) pour l'identification et/ou l'authentification dans des réseaux radio mobile (28).

3. Carte SIM (10) pour des terminaux mobiles (16) destinée à l'identification d'un abonné (A, B) dans un réseau radio mobile (28) selon l'une des revendications 1 à 3, **caractérisée en ce que** la deuxième zone (22) de la mémoire (18) pour stocker des données (MI1, MI2) pour l'identification et/ou l'authentification dans des réseaux radio mobile (28) est modifiable.

4. Carte SIM (10) pour des terminaux mobiles (16) destinée à l'identification d'un abonné (A, B) dans un réseau radio mobile (28) selon l'une des revendications 1 à 4, **caractérisée en ce que** la mémoire (18) est encodée.

5. Carte SIM (10) pour des terminaux mobiles (16) destinée à l'identification d'un abonné (A, B) dans un réseau radio mobile (28) selon l'une des revendications 1 à 5, **caractérisée en ce que** des moyens pour le paiement sans espèces sont prévus.

6. Carte SIM (10) pour des terminaux mobiles (16) destinée à l'identification d'un abonné (A, B) dans un réseau radio mobile (28) selon l'une des revendications 1 à 5, **caractérisée en ce que** l'autre zone (26) de la mémoire (18) est modifiable.

7. Carte SIM (10) pour des terminaux mobiles (16) destinée à l'identification d'un abonné (A, B) dans un réseau radio mobile (28) selon l'une des revendications 1 à 6, **caractérisée en ce que** l'autre zone (26) de la mémoire (18) est encodée.

8. Procédé pour une carte SIM (10) pour des terminaux mobiles (16) destinée à l'identification d'un abonné (A, B) dans un réseau radio mobile (28) selon l'une des revendications 1 à 7, dans lequel des données pour l'identification et/ou l'authentification dans des systèmes extrinsèques à la radio mobile (38, 42, 46, 50) sont stockées dans une première zone (24) d'une mémoire (18) d'une carte SIM (10),
**caractérisé en ce que**
- la première zone de stockage (24) de la carte SIM (10) peut être gérée et/ou modifiée par une unité de gestion centrale (36) du réseau radio mobile (28), dans lequel l'unité de gestion centrale (36) peut modifier, supprimer ou nouvellement introduire les données dans la mémoire (18) via le réseau radio mobile (28), et
- des données quelconques (D1, D2), qui diffèrent des données (K1, K2) pour l'identification et/ou l'authentification, sont stockées en tant que remplacement pour des cartes à puce traditionnelles dans une autre zone de stockage (26) modifiable, ces données (D1, D2) comprenant des données d'adresse, des données de caisse maladie, des données concernant des points de réduction d'un système de réduction, des données pour l'identification par rapport aux cartes de crédit ou aux cartes bancaires, ainsi que des données de patient par rapport à des progressions des maladies et leurs thérapies de traitement, ce qui permet d'obtenir une identification unique pour toutes les cartes précédentes.

9. Procédé pour une carte SIM (10) pour des terminaux mobiles (16) destinée à l'identification d'un abonné (A, B) dans un réseau radio mobile (28) selon la revendication 8, **caractérisé en ce que** des données pour l'identification et/ou l'authentification dans des réseaux radio mobile (28) sont stockées dans la deuxième zone (22) de la mémoire (18).

10. Procédé pour une carte SIM (10) pour des terminaux mobiles (16) destinée à l'identification d'un abonné (A, B) dans un réseau radio mobile (28) selon l'une des revendications 8 ou 9, **caractérisé en ce que** des données des identités différentes (A, B) sont stockées dans la mémoire (18).

11. Procédé pour une carte SIM (10) pour des terminaux mobiles (16) destinée à l'identification d'un abonné (A, B) dans un réseau radio mobile (28) selon l'une des revendications 8 à 10, **caractérisé en ce que** chaque identité (A, B) peut être récupérée séparément.

12. Procédé pour une carte SIM (10) pour des terminaux mobiles (16) destinée à l'identification d'un abonné (A, B) dans un réseau radio mobile (28) selon l'une des revendications 8 à 11, **caractérisé en ce que** les données, notamment pour l'identification et/ou l'authentification ainsi que par rapport au paiement sans espèces sont stockées de manière encodée.

13. Procédé pour une carte SIM (10) pour des terminaux mobiles (16) destinée à l'identification d'un abonné (A, B) dans un réseau radio mobile (28) selon l'une des revendications 8 à 12, **caractérisé en ce que** les données de la première zone (24) et/ou de la deuxième zone (22) et/ou de l'autre zone (26) de la mémoire (18) peuvent être récupérées via le réseau radio mobile (28).

14. Procédé pour une carte SIM (10) pour des terminaux mobiles (16) destinée à l'identification d'un abonné (A, B) dans un réseau radio mobile (28) selon l'une des revendications 8 à 13, **caractérisé en ce que** les données, qui sont stockées dans les zones de stockage (22, 24, 26), sont complètement ou partiellement comprimées.

15. Procédé pour une carte SIM (10) pour des terminaux mobiles (16) destinée à l'identification d'un abonné (A, B) dans un réseau radio mobile (28) selon l'une des revendications précédentes 10 à 14, **caractérisé en ce qu'**il est possible de commuter de manière sécurisée entre chaque identité stockée (A, B).

16. Procédé pour une carte SIM (10) pour des terminaux mobiles (16) destinée à l'identification d'un abonné (A, B) dans un réseau radio mobile (28) selon l'une des revendications précédentes 10 à 15, **caractérisé en ce qu'**une identité initiale (A) est stockée dans la mémoire (18).

17. Procédé pour une carte SIM (10) pour des terminaux mobiles (16) destinée à l'identification d'un abonné (A, B) dans un réseau radio mobile (28) selon l'une des revendications précédentes 8 à 16, **caractérisé en ce que** les données stockées, qui sont stockées dans les zones de stockage (22, 24, 26), sont complètement ou partiellement encodées.

18. Procédé pour une carte SIM (10) pour des terminaux mobiles (16) destinée à l'identification d'un abonné (A, B) dans un réseau radio mobile (28) selon la revendication 17, **caractérisé en ce qu'**une clé numérique est utilisée pour encoder les données stockées.

19. Procédé pour une carte SIM (10) pour des terminaux mobiles (16) destinée à l'identification d'un abonné (A, B) dans un réseau radio mobile (28) selon la revendication 18, **caractérisé en ce que** la clé numérique pour l'encodage est modifiable.
